# EUROPEAN PATENT APPLICATION

(11) **EP 4 113 361 A1**
(43) Date of publication of application: **04.01.2023**
(21) Application number: 21305888.6
(22) Date of filing: 28.06.2021
(51) Int. Cl.: G06K 7/10

(54) **METHOD FOR MANAGING A CONTACTLESS CARD**

(71) Applicant: Thales DIS France SA, 92190 Meudon (FR)
(72) Inventor: SALLES, Jean-Luc, 92190 MEUDON (FR); LELOUP, Laurent, 92190 MEUDON (FR); BOULANGER, Nicolas, 92190 MEUDON (FR); SOUCHON, Pierre, 92190 MEUDON (FR)
(74) Representative: Grevin, Emmanuel

(57) **Abstract**

The invention is a method for managing a smart card (30) comprising an antenna (31) and contact pads (33) and able to communicate with a contactless device (20). The method comprises a step of providing a physical device (10) comprising a first area (11) configured to accommodate the contactless device (20) and a second area (12) configured to house the card, the physical device comprising a first antenna (13) located in the first area, a second antenna (14) located in the second area and a wired bridge (15) linking said first and second antennas, the physical device comprising an energy source (18) configured to power said contact pads (33) of the card when housed in the second area; and in that the method comprises a step of placing the card in said second area (12) and placing the portable device in said first area (11).

## Description

### (Field of the invention)

The present invention relates to methods of managing contactless cards. It relates particularly to methods for managing content of passive contactless smart cards working in short-range communication.

### (Background of the invention)

Communication protocols in contactless domain are based on the exchanging of data via a modulated magnetic field. A contactless reader (also known as Proximity Coupling Device) has an antenna and is able to modulate the electromagnetic field also called Radio Frequency IDentification (RFID) field or RF field and to provide energy to contactless devices like contactless cards. Both the contactless reader and the contactless device communicate thanks to an inductive coupling in a field frequency which may equal to 13.56 MHz. In particular, the ISO/IEC14443, ISO/IEC21481 and ISO/IEC18092 standards and standards from NFC Forum provide modulation technologies and communication protocols which may be used in contactless domain.

A passive contactless device is usually unable to generate a modulated electromagnetic field. A passive device uses the RF field produced by another contactless device as power source and apply a retro-modulation to the RF field for sending information to the device which generates the field. Contactless cards are generally passive devices. Users may encounter some difficulties for establishing a stable contactless connection between two NFC-enabled devices due to the characteristic of the antenna and the electromagnetic field shape and strength. It may happen that the passive device does not retrieve power enough from the electromagnetic field to be able to communicate with the other device during an entire transaction which may take several seconds.

The document EP1521206B1 describes a relaying apparatus between a reader and a contactless card in RFID. Such a RFID bridge does not solve the issue of connection stability during a complete transaction.

There is a need to maintain a stable connection during a full contactless transaction involving a passive contactless smart card.

### (Summary of the Invention)

The invention aims at solving the above mentioned technical problem.

An object of the present invention is a physical device comprising a first area which is configured to accommodate a contactless device and a second area which is configured to house a NFC-enabled smart card that comprises an antenna, a chip and contact pads. The smart card is able to communicate with the contactless device which is configured to act as a NFC reader through said antenna of the card by applying a retro-modulation to a NFC field generated by the contactless device. The physical device comprises a first antenna located in the first area, a second antenna located in the second area and a wired bridge linking said first and second antennas. The physical device comprises an energy source which is configured to power the contact pads of the NFC-enabled smart card when the smart card is housed in the second area.

Advantageously, the first area may comprise one recess or at least two cavities included in each other.

Advantageously, the physical device may be configured to be folded along a straight line such that said first area at least partially covers said second area.

Advantageously, the physical device may be a portable physical device and the energy source may be a battery.

Another object of the present invention is a system comprising the physical device of the invention and a NFC-enabled smart card comprising an antenna and contact pads. The smart card is configured to simultaneously receive energy through said contact pads, and through said antenna when the smart card is in communication with the contactless device.

Advantageously, the smart card may have a field sensor able to provide a value reflecting the power level retrieved by the card from a NFC field generated by the contactless device, the smart card may be configured to send a request to the contactless device if said power level is below a preset threshold and the contactless device may be configured to present a message depending on the power level to a user in response to receipt of said request.

Another object of the present invention is a method for managing a NFC-enabled smart card comprising an antenna, a chip and contact pads. The smart card is able to communicate with a contactless device configured to act as a NFC reader through said antenna. The method comprises a step of providing a physical device comprising a first area configured to accommodate the contactless device and a second area configured to house said NFC-enabled smart card, the physical device comprising a first antenna located in the first area, a second antenna located in the second area and a wired bridge linking said first and second antennas, the physical device comprising an energy source configured to power said contact pads of the NFC-enabled smart card when housed in the second area. The method comprises a step of placing the smart card in said second area and placing the portable device in said first area.

Advantageously, the smart card may have a field sensor able to provide a value reflecting the power level retrieved from a NFC field generated by the contactless device, the smart card may send a request to the contactless device if said power level is below a preset threshold and the contactless device may present a message depending on the power level to a user in response to receipt of said request.

Advantageously, one or more instructions may be provided to a user through a user output interface of the contactless device to operate one or more actions on the smart card.

Advantageously, the smart card may comprise a biometry sensor, and said one or more instructions may guide the user to perform an enrolment of a biometric reference through the biometry sensor.

Advantageously, the contactless device may comprise a card manager which may retrieve data reflecting a current status of the smart card though the NFC field and may identify said one or more instructions according to said current status.

Advantageously, the smart card may send to the contactless device a data reflecting a power level of the NFC field received by the smart card, one or more instructions may be provided to a user through a user output interface of the contactless device to change position of the contactless device in regard to the first antenna of the first area, said one or more instructions being identified using said data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an internal architecture of a contactless smart card according to an example of the invention;
- Figure 2 depicts an architecture of a physical device designed to facilitate communication between two contactless devices according to an example of the invention;
- Figure 3 depicts an internal architecture of contactless device able to generate an electromagnetic field according to an example of the invention; and
- Figure 4 depicts the physical device of Figure 2 when coupled to two contactless devices according to an example of the invention.

### (Detailed description of the preferred embodiments)

The invention may apply to any type of contactless device intended to communicate with a contactless reader through a short-range modulated magnetic field. In preferred embodiment, the contactless smart card complies with the ISO/IEC14443 or NFC Forum Tag standard.

The invention may apply to contactless devices or Proximity IC Card (PICC) in many applicative domains, like banking, payment, Passport, Health, Access control, loyalty or transport. Although the invention is well designed to apply to passive contactless cards it may also apply to active cards.

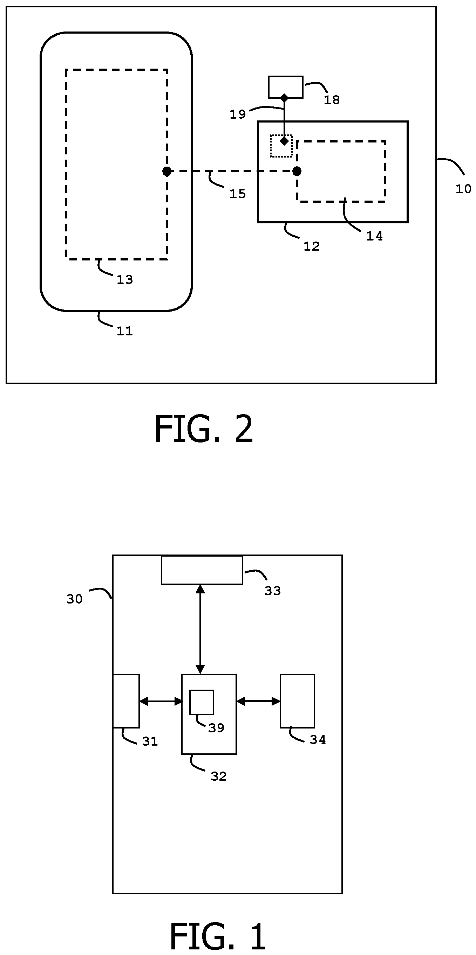

Figure 1 shows the internal architecture of a contactless smart card 30 according to an example of the invention.

The smart card 30 comprises an antenna 31 adapted to communicate in contactless mode and contact pads 33 adapted to communicate in contact mode.

The smart card 30 comprises a chip 32 linked to both the antenna 31 and the contact pads 33. Although not mandatory, the card 30 may comprise a biometric sensor 34 which may be a fingerprint scanner. Preferably, the contact pads 33 are compliant with ISO/IEC7816 standards.

The chip 32 (also called secure element) may be a microprocessor or a microcontroller. The chip embeds an operating system and may comprise one or more applicative services. For instance, the chip may comprise an application related to Identity domain (e.g. Passport), driving license, access management (e.g. control of access to physical or logical domains), loyalty, Health domain, transport (e.g. ticketing, mass transit) or banking domain (e.g. wallet, payment).

The card 30 may be configured to communicate in contactless mode through ISO/IEC 14443 type A (or type B), Mifare^{®}, Felica^{®} or NFC Forum Tag standards. In a preferred embodiment, the smart card 30 is an NFC-capable card compliant to ISO/IEC 14443 standard.

The smart card 30 is adapted to apply a retro-modulation to a NFC field generated by another contactless device (acting as a NFC reader) in order to communicate with the contactless device through the antenna 31.

When the smart card 30 is in communication with the contactless device and receives energy through said contact pads, the smart card 30 is configured to power the chip 32 and to perform the field retro-modulation by using a combination of energy retrieved from said antenna and said contact pads.

It is to be noted that when the smart card 30 is in communication with a conventional contactless reader (like a POS terminal or a contactless reader for instance) device (and the card does not receive energy through its contact pads) for performing a conventional contactless transaction, the smart card 30 is configured to power the chip 32 by using energy retrieved through its antenna only. In other words, the smart card 30 may work as a conventional passive contactless card for conventional contactless operations.

Preferably, the chip 32 may comprise a key 39 which may be used by the smart card 30 to secure data exchanged through the antenna 31 with another contactless device.

Preferably, the smart card 30 may include a field sensor (not drawn) able to provide a value reflecting the power level retrieved from the RF field in which the card is located. In other words, the field sensor is configured to evaluate the energy level the card is able to extract from the electromagnetic field generated by another device. The field sensor provides a value reflecting the power level retrieved from the electromagnetic field. The card is configured to send a request through its antenna (to the contactless device generating the field) if said measured power level is below a preset threshold. The request is designed to trigger presentation (by the contactless device) of a message whose content depends on the measured power level to a user.

The chip 32 may be configured to act as the field sensor.

For instance, if the power level measured by the card is below the predefined threshold, the card may send a request to the reader (e.g. a NFC smartphone) which trigger the display of the message "Please move the smartphone slightly" by the device generating the electromagnetic field. For instance, the predefined threshold may be set to 1,5 A/m.

If the power level measured by the card is above (or equal) the predefined threshold, the card may send a message reflecting the fact that the card receives enough energy from the RF field to work correctly. For instance, the card may ask the contactless reader to display a message "Communication established. Do not move your smartphone. You can start the enrollment process."

The smart card 30 may include a biometric sensor 34 which may be a fingerprint scanner for instance. The card 30 may also comprise a sensor controller configured to interface with both the chip 32 and the biometric sensor 34. The biometric sensor 34 may be powered by energy retrieved through the contact pads, by energy retrieved through the antenna or a combination of both.

Figure 2 shows the architecture of a physical device 10 designed to facilitate communication between two contactless devices according to an example of the invention.

The physical device 10 comprises a first area 11 which is configured to accommodate a contactless device 20 (not shown) able to generate an electromagnetic field.

The physical device 10 comprises a second area 12 which is configured to house a NFC-enabled smart card 30 (not shown at Figure 2).

The physical device 10 comprises a first antenna 13 that is located in the first area, a second antenna 14 that is located in the second area and a wired bridge 15 that links said first and second antennas.

The physical device 10 comprises an energy source 18 configured to power the contact pads of a smart card when the smart card is housed in the second area.

The energy source 18 may be internal (e.g. disposable battery, rechargeable battery, mini photovoltaic panel, etc.) For instance the battery may be a CR2016 battery.

The energy source 18 may be powered by an external system. For instance, the energy source may be powered through a power cable to be connected to an electrical outlet or a USB cable.

Preferably the physical device 10 comprises a wired link 19 that carries the current between the energy source 18 and the area (in dotted line at Figure 2) where the smart card contact pads will be located when the smart card is placed in the second area 12. The distance between the wired link 19 and the bottom of the second area may be chosen so that the contact pads touch the wired link 19 when the smart card is housed in the second area 12.

The first area 11 may comprise one recess in which a portable contactless device (like a smartphone) may be placed. The first area 11 may comprise more than one recesses or cavities included in each other. In such a configuration, each cavity can be designed to correspond to the shape/size of a type of portable contactless device able to generate a field. In a preferred embodiment, each cavity is designed to match a smartphone model which is widely deployed on a targeted country.

In some embodiments, the first area 11 may be devoid of cavity and comprise one or more wedges to guide the placement of the contactless device 20 in the first area.

The first antenna 13 (located in the first area 11) may comprise one or more loops positioned to cover different places in the first area. Location of each loop can be chosen to match the location of the antennas integrated into the main smartphones available on the market.

The second antenna 14 (located in the second area 12) may be designed to match the shape and position of the antenna 31 of the smart card 30.

The physical device 10 may be configured to be folded along a straight line such that the first area 11 at least partially covers the second area 12 when the physical device is folded in half. The size and bulk of the physical device is then reduced when it is folded.

In a preferred embodiment, the physical device is a portable physical device and the energy source 18 is a battery. The physical device may be a package used to deliver a smart card to a user. For instance, the body of package may be made of cardboard, plastic or paper.

A system according to an embodiment of the invention may comprise both the physical device 10 and the smart card 30. Such a system may be provided to a user in order to deploy new contactless cards on the field.

In one embodiment, the physical device may be an appliance/machine intended to be installed in a public area or a private area and presenting the two areas 11 & 12 at a height suitable for a category of users (people standing or seated for example).

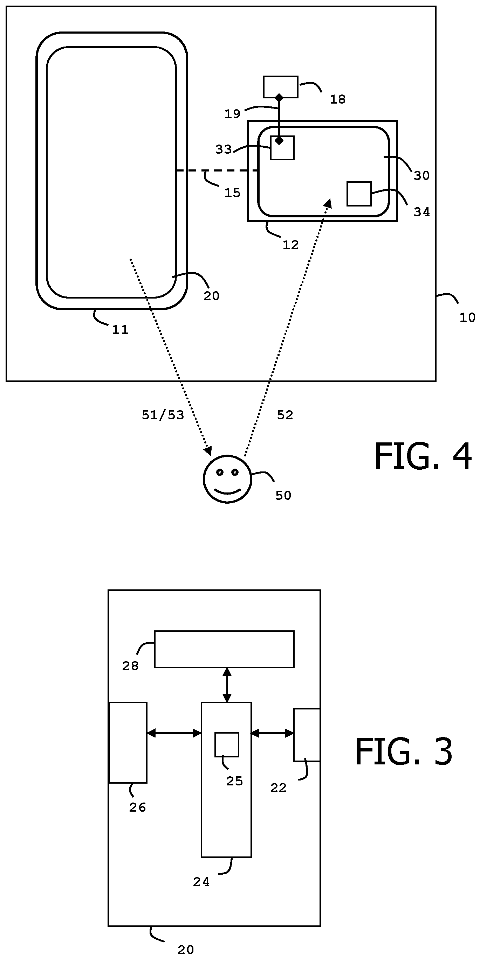

Figure 3 shows an internal architecture of contactless device 20 able to generate an electromagnetic field according to an example of the invention.

The contactless device 20 comprises a communication unit (not shown) which is capable of generating a modulated electromagnetic field. The contactless device 20 comprises an antenna 22 configured to emit the generated RF field.

The contactless device 20 may comprise a user output interface 28 like a display or a speaker.

The contactless device 20 may comprise a user input interface 26 like a keyboard, a set of button (s) or a digital keyboard managed through a display.

The contactless device 20 may comprise a card manager 24 configured to manage requests coming from the smart card 30 and to prepare and send commands or data to the smart card 30 through a contactless channel. The card manager 24 may store a key 25 dedicated to securing contactless communication with the smart card 30. The card manager 24 may be configured to encipher or sign data exchanged with the smart card using the key 25.

The card manager 24 may be configured to retrieve data reflecting a current status of the smart card through the electromagnetic field and to identify one or more instructions (to be presented to a user through a user output interface of the contactless device 20) according to the current card status.

The card manager 24 may be configured to automatically update data stored in the smart card (ex: patch or application update) according to the current card status.

In a preferred embodiment the contactless device 20 is a smartphone. In another embodiment, the contactless device 20 may be a tablet (or tablet computer) embedding a NFC reader.

Figure 4 shows the physical device of Figure 2 when coupled to two contactless devices according to an example of the invention.

A portable contactless device 20 has been placed in the first area 11. In the example of Figure 4, the portable contactless device 20 is a NFC-enabled smartphone. When the contactless device 20 is placed in/on the first area 11, the antenna 22 of the device 20 is placed close to the antenna 13 of the first area. Thus the electromagnetic field (generated by the contactless device 20) may be propagated from antenna 22 to antenna 13 with good performances.

A smart card 30 has been placed in the second area 12. The contacts pads 33 of the card 30 are powered by the energy source 18 through the wired link 19. When the card 30 is housed in the second area, the antenna 31 of the card 30 is placed close to the antenna 14 of the second area. Thus the electromagnetic field may be propagated from antenna 14 to antenna 31 with good performances.

In the example of Figure 4, the card comprises a fingerprint sensor 34. The second area 12 may be placed and oriented on the physical device 10 so that the biometric sensor 34 is placed near (e.g. less than 2 cm) the edge of the physical device when the card is housed by the objected. Thus the user 50 may grasp the physical device by pinching the physical device so that their finger is located on the sensor 34 of the housed card. Such a configuration allows the user to present their finger in a similar way to what they would do when grasping the smart card alone.

In one embodiment, the invention is a method for managing a contactless smart card as described at Figure 1.

When the smart card receives energy through said contact pads and is in contactless communication with a contactless device configured to generate an electromagnetic field, the smart card may power its own chip by using energy retrieved from its own contact pads and may use energy retrieved from its own antenna to perform the retro-modulation to the RF field generated by the contactless device in order to communicate with the contactless device.

The method may comprise one or more steps in which one or more instructions 51 are provided to a user 50 through the user output interface 28 of the contactless device to operate one or more actions 52 on the smart card.

For example, the smart card may comprise a biometry sensor 34, and sent instructions may guide the user to perform an enrolment of a biometric reference through the biometry sensor.

In another example, sent instructions may guide the user to perform a verification of the correct enrolment of a biometric reference. Such a verification usually need to ask the user to present their finger to control that the captured fingerprint match the registered biometric reference previously stored in the card.

The card manager 24 of the contactless device 20 may retrieve data reflecting a current status of the smart card through the modulated field and identify instructions (to be presented to the user) according to the current card status. For instance, during an enrollment session, the contactless device 20 may get the number of stored biometric data and provide the user with instruction to present once again their finger (to the fingerprint sensor) if the number or the quality of the stored biometric data is not sufficient to build a biometric reference template. (Assuming that several captures are needed to generate an acceptable biometric reference template.)

In order to help the user to place the contactless device at a position which allows good RF performances, the smart card may evaluate the power level it can retrieve from the RF field then send to the contactless device a data reflecting the measured power level of the RF field. Then one or more instructions 53 may be identified and provided to the user 50 through a user output interface 28 of the contactless device to request the user to change position of the contactless device 20. The contactless device 20 may identify or select the instruction(s) 53 using the data reflecting the measured power level.

For example, the contactless device may display a message "Weak signal (or no signal if the card does not respond) - please slowly move your phone around the drawn area (i.e. on the first area 11) until you get a sufficient signal".

Once the contactless device is placed at the right location, it can display a message "Sufficient signal!" You can start recording/enrollment".

The invention is not limited to management of one smart card by one contactless device. A contactless device may manage several smart cards (one after the other). The contactless device 20 may contain as many keys corresponding to as many cards.

The physical device 10 may be used for managing different types of cards having one or more applications which may be of different type. For example, a contactless card may contain six contactless applications dedicated to as many services like a physical access control (for opening a Gate), two distinct purses, a logical access control (for logon in a computer), a transport application (for accessing a subway network) and an identity service.

Thanks to some embodiments of the invention, the smart card may use energy received through its contact pads for powering its chip (and possibly other embedded components like a biometric sensor) and the smart card may use all (or a only a part of) energy received through the electromagnetic field to retro-modulate the field in order to communicate with the device 20. Since the energy available from the magnetic field is supplemented by the energy retrieved through the contact pads, the energy available for performing the retro-modulation applied to the field may be sufficient and may allow to generate a retro-modulation which is strong enough for the contactless device (acting as a contactless reader) to detect it and to be able to interpret the data sent by the smart card. Thus the card may maintain a stable connection during a full contactless transaction in which it is involved with a device generating the electromagnetic field.

Thanks to some embodiments of the invention, the strength of the field emitted by the contactless device 20 may be lower than the one required by a conventional contactless card.

Thanks to some embodiments of the invention, the user can be guided to help them to place the contactless device at the position allowing good RF performances and a stable RF communication session.

Thanks to some embodiments of the invention, the user can simultaneously see the display of the smartphone and easily access the biometric sensor of the card, contrary to the case where the card is placed under the smartphone.

An advantage of some embodiments of the invention is to allow to keep unchanged the hardware architecture of already deployed contactless smartphones. The card manager may be implemented as a software application installed on the smartphone.

## Claims

1. A physical device (10),
**characterized in that** the physical device comprises a first area (11) configured to accommodate a contactless device (20) and a second area (12) configured to house a NFC-enabled smart card (30) comprising an antenna (31), a chip (32) and contact pads (33), the smart card being able to communicate with the contactless device (20) configured to act as a NFC reader through said antenna by applying a retro-modulation to a NFC field generated by the contactless device,
**in that** the physical device comprises a first antenna (13) located in the first area, a second antenna (14) located in the second area and a wired bridge (15) linking said first and second antennas,
**in that** the physical device comprises an energy source (18) configured to power said contact pads (33) of the NFC-enabled smart card when housed in the second area.

2. The physical device according to claim 1, wherein said first area (11) comprises one recess or at least two cavities included in each other.

3. The physical device according to claim 1, wherein said physical device is configured to be folded along a straight line such that said first area (11) at least partially covers said second area (12).

4. The physical device according to claim 1, wherein said physical device is a portable physical device and the energy source (18) is a battery.

5. A system comprising the physical device of claim 1 and a NFC-enabled smart card (30) comprising an antenna (31) and contact pads (33), wherein said smart card is configured to simultaneously receive energy through said contact pads, and through said antenna when the smart card is in communication with the contactless device.

6. The system according to claim 5, wherein the smart card has a field sensor able to provide a value reflecting the power level retrieved from a NFC field generated by the contactless device, wherein the smart card is configured to send a request to the contactless device if said power level is below a preset threshold and wherein the contactless device is configured to present a message depending on the power level to a user (50) in response to receipt of said request.

7. A method for managing a NFC-enabled smart card (30) comprising an antenna (31), a chip (32) and contact pads (33), the smart card being able to communicate with a contactless device (20) configured to act as a NFC reader through said antenna,
**characterized in that**, the method comprises a step of providing a physical device (10) comprising a first area (11) configured to accommodate the contactless device (20) and a second area (12) configured to house said NFC-enabled smart card (30), the physical device comprising a first antenna (13) located in the first area, a second antenna (14) located in the second area and a wired bridge (15) linking said first and second antennas, the physical device comprising an energy source (18) configured to power said contact pads (33) of the NFC-enabled smart card when housed in the second area; and **in that** the method comprises a step of placing the smart card in said second area (12) and placing the portable device in said first area (11).

8. The method according to claim 7, wherein the smart card has a field sensor able to provide a value reflecting the power level retrieved from a NFC field generated by the contactless device, wherein the smart card sends a request to the contactless device if said power level is below a preset threshold and wherein the contactless device presents a message depending on the power level to a user (50) in response to receipt of said request.

9. The method according to claim 8, wherein one or more instructions (51) are provided to a user (50) through a user output interface (28) of the contactless device to operate one or more actions (52) on the smart card.

10. The method according to claim 9, wherein said smart card comprises a biometry sensor (34), and wherein said one or more instructions guide the user to perform an enrolment of a biometric reference through the biometry sensor (34).

11. The method according to claim 9, wherein said contactless device comprises a card manager (24) which retrieves data reflecting a current status of the smart card though the NFC field and identifies said one or more instructions according to said current status.

12. The method according to claim 7 wherein said smart card sends to the contactless device a data reflecting a power level of the NFC field received by the smart card, and wherein one or more instructions (53) are provided to a user (50) through a user output interface (28) of the contactless device to change position of the contactless device (20) in regard to the first antenna (13) of the first area (11), said one or more instructions (53) being identified using said data.
